# EUROPEAN PATENT SPECIFICATION

(11) **EP 3 905 399 B1**
(45) Date of publication and mention of the grant of the patent: **18.06.2025**
(21) Application number: 21169731.3
(22) Date of filing: 21.04.2021
(51) Int. Cl.: H01M 8/00, H01M 8/0215, H01M 8/0228, H01M 8/0254, H01M 8/026, H01M 8/1226, H01M 8/1286, H01M 8/124, H01M 8/12

(54) **HIGH POWER DENSITY FUEL CELL**
BRENNSTOFFZELLE MIT HOHER LEISTUNGSDICHTE
PILE À COMBUSTIBLE À DENSITÉ DE PUISSANCE ÉLEVÉE

(30) Priority: 21.04.2020 US 202063012978 P
(43) Date of publication of application: 03.11.2021
(73) Proprietor: Hamilton Sundstrand Corporation, Charlotte, NC 28217-4578 (US)
(72) Inventor: ZHU, Tianli, Glastonbury, 06033 (US); HAWKES, Justin R., Marlborough, CT, 06447 (US); SHEEDY, Paul, Bolton, 06043 (US); VOLETI, Sreenivasa R, Farmington, 06032 (US)
(74) Representative: Dehns

(56) References cited:
- EP-A1- 3 442 064
- US-A1- 2019 372 132
- US-A1- 2020 036 036

## Description

### BACKGROUND

Exemplary embodiments pertain to the art of fuel cells, and in particular to fuel cell configurations having high power density for use in, for example, aircraft applications.

The increased use of electrical power in aircraft systems and propulsion requires advanced electrical storage systems and/or a chemical to electrical power conversion system to generate adequate amounts of electrical power. Both high system efficiency and high power density of the conversion system are required.

Fuel cell based power systems, such as solid oxide fuel cell (SOFC) based power systems, are able to achieve electrical efficiencies of 60% or greater. Further, SOFC power systems can operate with a variety of fuels and are scalable to achieve different power levels. Current, state of the art SOFC systems, however, have relatively low power densities of below 500 watts per kilogram, and relatively slow startup times typically exceeding 30 minutes. For aircraft and aerospace applications, increased power densities and reduced startup times are required.

US2019372132, US2020036036 and EP3442064 disclose a fuel cell stacks.

### BRIEF DESCRIPTION

In one embodiment, a fuel cell includes a plurality of fuel cell layers stacked along a stacking axis. Each fuel cell layer includes a stacked arrangement of elements including a cathode, an anode, an electrolyte positioned between the anode and the cathode, a support layer positioned at the anode opposite the electrolyte, and a separator plate located at the support layer opposite the anode. The support layer is configured to contact the cathode of an adjacent fuel cell layer of the plurality of fuel cell layers. The separator plate defines a plurality of anode flow channels configured to deliver a fuel therethrough and a plurality of cathode flow channels configured to deliver an air flow therethrough.

Additionally or alternatively, in this or other embodiments the electrolyte is formed from a solid oxide material.

Additionally or alternatively, in this or other embodiments the separator plate defines the plurality of anode flow channels at a first side of the separator plate and the plurality of cathode flow channels at a second side of the separator plate opposite the first side.

Additionally or alternatively, in this or other embodiments the separator plate includes a plurality of curved portions separated by flat support portions, with the support portions interfacing with the support layer and curved portions contacting the cathode of the adjacent fuel cell layer.

Additionally or alternatively, in this or other embodiments the wherein the plurality of anode flow channels at least partially overlap the plurality of cathode flow channels along the stacking axis.

Additionally or alternatively, in this or other embodiments the support layer includes a porous portion located at the anode flow channels configured to allow fuel flow from the anode fuel channels to the anode through the porous portion.

Additionally or alternatively, in this or other embodiments the support layer further includes a non-porous portion surrounding the porous portion.

Additionally or alternatively, in this or other embodiments one or more manifolds are located in the solid portion to distribute fuel to the plurality of anode flow channels.

Additionally or alternatively, in this or other embodiments the support layer is formed from a metal material.

Additionally or alternatively, in this or other embodiments a metal catalyst foam is located between the support layer and the separator plate.

In another embodiment, fuel cell layer of a multi-layer fuel cell includes a cathode, an anode, an electrolyte located between the anode and the cathode, a support layer positioned at the anode opposite the electrolyte, and a separator plate positioned at the support layer opposite the anode. The support layer is configured to contact the cathode of an adjacent fuel cell layer. The separator plate defines a plurality of anode flow channels configured to deliver a fuel therethrough and a plurality of cathode flow channels configured to deliver an air flow therethrough.

Additionally or alternatively, in this or other embodiments the electrolyte is formed from a solid oxide material.

Additionally or alternatively, in this or other embodiments the separator plate defines the plurality of anode flow channels at a first side of the separator plate and the plurality of cathode flow channels at a second side of the separator plate opposite the first side.

Additionally or alternatively, in this or other embodiments the separator plate includes a plurality of curved portions separated by flat support portions, with the support portions interfacing with the support layer and curved portions contacting the cathode of the adjacent fuel cell layer.

Additionally or alternatively, in this or other embodiments the plurality of anode flow channels at least partially overlap the plurality of cathode flow channels along the stacking axis.

Additionally or alternatively, in this or other embodiments the support layer includes a porous portion disposed at the anode flow channels configured to allow fuel flow from the anode fuel channels to the anode through the porous portion.

Additionally or alternatively, in this or other embodiments the support layer further includes a non-porous portion surrounding the porous portion.

Additionally or alternatively, in this or other embodiments one or more manifolds are located in the solid portion to distribute fuel to the plurality of anode flow channels.

Additionally or alternatively, in this or other embodiments the support layer is formed from a metal material.

Additionally or alternatively, in this or other embodiments a metal catalyst foam is located between the support layer and the separator plate.

### BRIEF DESCRIPTION OF THE DRAWINGS

The following descriptions should not be considered limiting in any way. With reference to the accompanying drawings, like elements are numbered alike:
FIG. 1 is a schematic illustration of an embodiment of a solid oxide fuel cell;
FIG. 2 is a schematic illustration of an embodiment of a fuel cell having a multilayer structure;
FIG. 3 is a schematic illustration of an embodiment of a fuel cell layer;
FIG. 4 is another schematic illustration of an embodiment of a fuel cell layer; and
FIG. 5 is a partially exploded view of an embodiment of a fuel cell layer.

### DETAILED DESCRIPTION

A detailed description of one or more embodiments of the disclosed apparatus and method are presented herein by way of exemplification and not limitation with reference to the Figures.

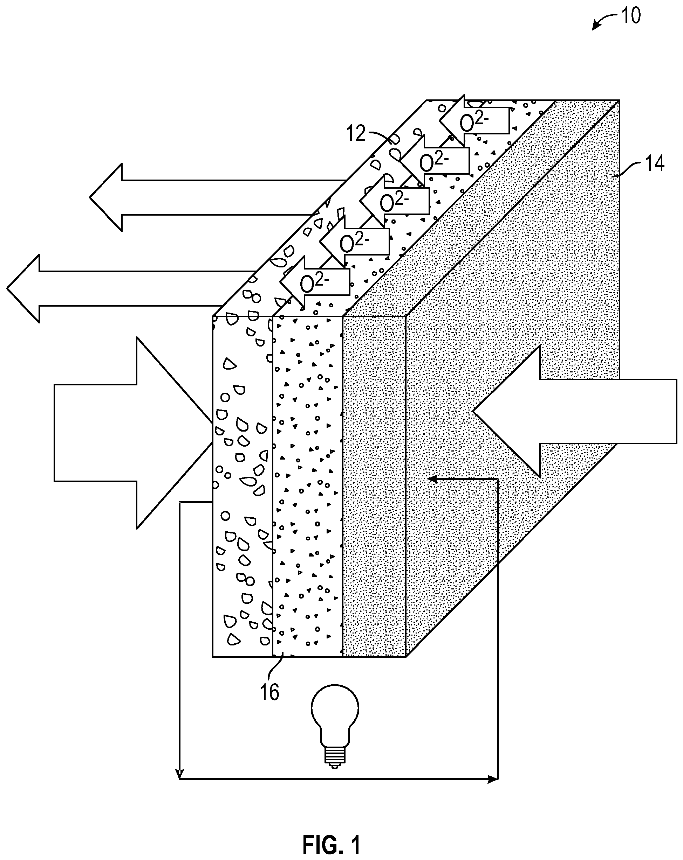

Referring to FIG. 1, shown is a schematic illustration of an embodiment of a fuel cell (10). In some embodiments, the fuel cell 10 is a solid oxide fuel cell, a proton conducting fuel cell, an electrolyzer, or other fuel cell apparatus. The fuel cell 10 includes an anode 12 and a cathode 14 with an electrolyte 16 disposed between the anode 12 and the cathode 14. In the case of the solid oxide fuel cell 10, the electrolyte 16 is a solid oxide material such as, for example, a ceramic material. A flow of fuel is introduced to the fuel cell 10 along with a flow of air. Chemical reactions of the fuel and air with the electrolyte 16 produces electricity. In some embodiments, an operating temperature of the fuel cell 10 is in the range of 400 -900 degrees Celsius, while in other embodiments the operating temperature is in the range of 400-750 degrees Celsius. The flow of fuel may comprise, for example, natural gas, coal gas, biogas, hydrogen, or other fuels such as jet fuel.

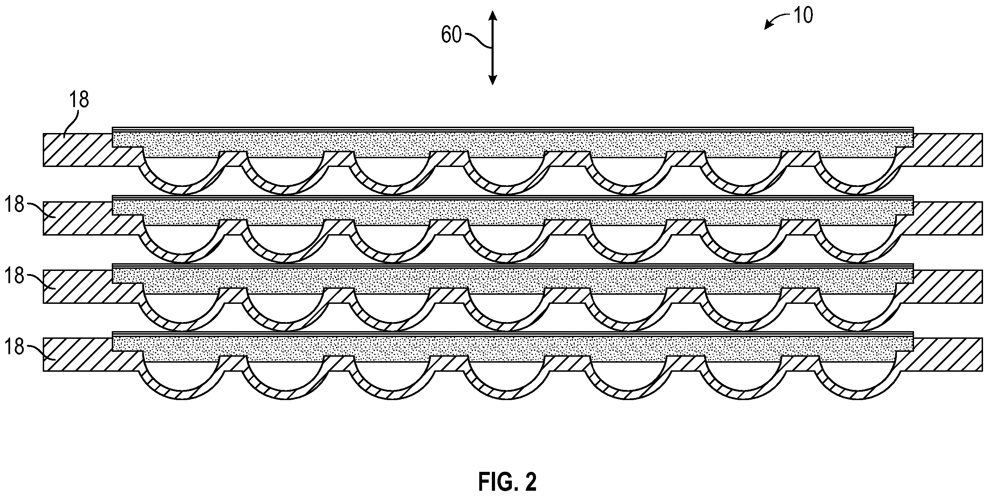

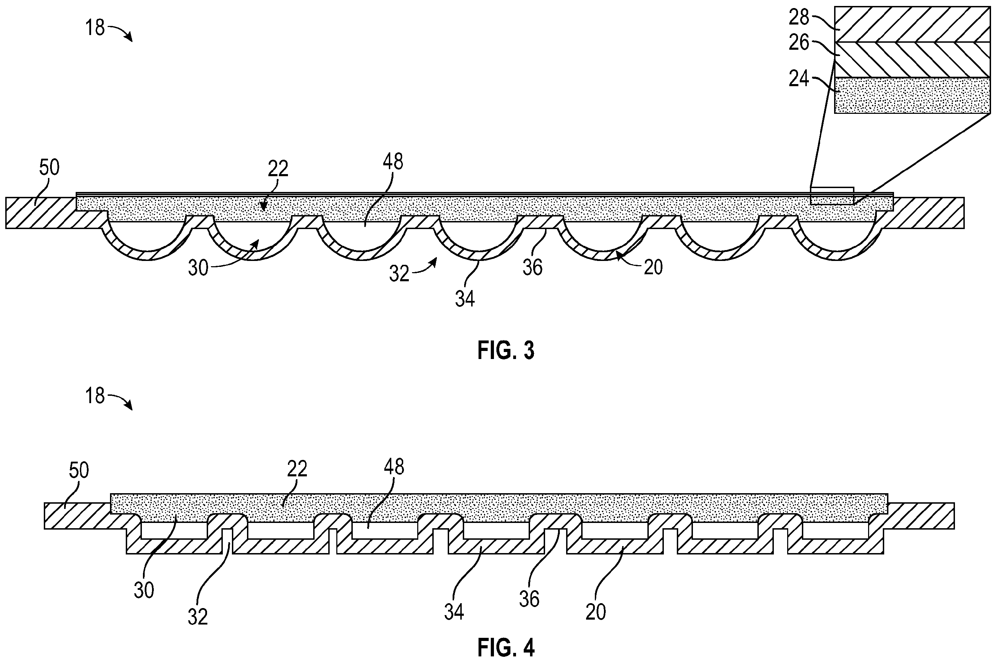

Referring now to FIG. 2, the fuel cell 10 includes a plurality of fuel cell layers 18 stacked along a stacking axis 60. In some embodiments, each fuel cell layer 18 has a rectangular shape. It is to be appreciated, however, that the fuel cell layers 18 may have other polygonal shapes or may be, for example, circular, elliptical or oval in shape. As shown in FIG. 3, each fuel cell layer 18 includes a separator plate 20 and a support 22 located over the separator plate 20 with the support 22 secured to the separator plate 20. Joining the support 22 to the separator plate 20 increases their individual strength and rigidity, and allows for using thinner, lighter materials in forming the support 22 and the separator plate 20 than would be otherwise feasible. An anode 24, electrolyte 26 and a cathode 28 are stacked atop the support 22 in that order. In some embodiments, the electrolyte 26 is formed from a solid oxide material, such as a ceramic material. The fuel cell layers 18 are stacked such that the cathode 28 contacts the separator plate 20 of the neighboring fuel cell layer 18.

The separator plate 20 is compliant and lightweight and is shaped to define a plurality of anode flow channels 30 and a plurality of cathode flow channels 32 and separate the anode flow channels 30 from the cathode flow channels 32. The plurality of anode flow channels 30 are defined at a first side of the separator plate 20 and the plurality of cathode flow channels 32 are defined at a second side of the separator plate 20 opposite the first side. As illustrated the anode flow channels 30 and the cathode flow channels 32 at least partially overlap along the stacking axis 60. This improves a density of the fuel cell 10 along the stacking axis 60.

Compliance of the separator plate 20 ensures good contact with the cathode 28 for high performance, and the separator plate 20 is configured for light weight to enable high power density of the fuel cell 10. The fuel flows through the anode flow channels 30 and the air flows through the cathode flow channels 32. In some embodiments, such as in FIG. 3, the separator plate 20 includes a plurality of curved portions 34 separated by flat support portions 36, with the support portions 36 interfacing with the support 22 and curved portions 34 contacting the cathode 28 of the neighboring fuel cell layer 18. The waveform shape of the separator plate 20 with the plurality of curved portions 34 allows for greater levels of fuel flow coverage to the anode 24 and a greater level of airflow coverage to the cathode 28. In other embodiments, the curved portions 34 may have other shapes, such as rectilinear as shown in FIG. 4. The shapes illustrated in FIGs. 3 and 4 are merely exemplary, with the shapes of anode flow channels 30 and cathode flow channels 32 selected to provide the desired compliance in the stacking axis 60 direction, while allowing for selected anode and cathode flows which may be at significantly different flow rates. The separator plate 20 may be formed from corrugated sheet stock with features on the order of millimeters to centimeters. Alternatively, the separator plate 20 may be formed from sheet material by, for example, stamping, extrusion, folding, bending, roll forming, hydroforming, or the like. Other methods may include injection molding, additive manufacturing including laser powder bed fusion, electron beam melting, directed energy deposition, or laminated object manufacture. In still other embodiments, the separator plate may be formed at least partially by a process such as ultraviolet lithography and etching which may be used to form features with a resolution below 10 microns, or by micro-EDM (electrical discharge machining) or laser micromachining, both of which that may be utilized to produce features with a resolution in the range of 50 to 100 microns. In some embodiments, the separator plate 20 is formed from a stainless steel or titanium material.

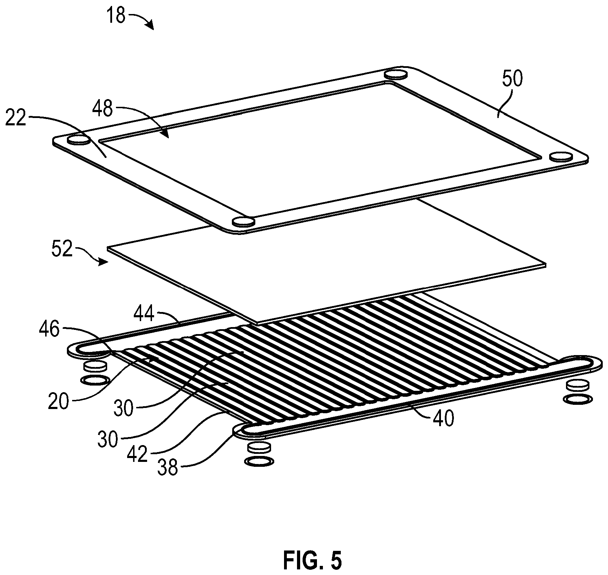

Referring again to FIG. 3 and also to the partially exploded view of FIG. 5, fuel is distributed to the anode fuel channels 30 via a primary manifold 38 and a secondary manifold 40. The primary manifold 38 extends between the fuel cell layers 18 to distribute fuel to each fuel cell layer 18 of the plurality of fuel cell layers 18. Each fuel cell layer 18 includes a secondary manifold 40 located at, for example, a first end 42 of the anode flow channels 30. The secondary manifold 40 is connected to the primary manifold 38 and the plurality of anode flow channels 30 to distribute fuel from the primary manifold 38 to each of the anode flow channels 30 of the fuel cell layer 18. The anode flow channels 30 extend from the secondary manifold 40 at the first end 42 of the anode flow channels 30 to a collection manifold 44 at a second end 46 of the anode flow channels 30. Fuel flows from the primary manifold 38 through the secondary manifold 40, and through the anode flow channels 30 with anode byproducts such as water vapor and carbon dioxide exiting the anode flow channels 30 and flowing into the collection manifold 44.

The support layer 22 is formed from a metal material in some embodiments, and includes a porous section 48 and a non-porous or solid section 50, with the solid section 50 surrounding the porous section 48 and defining an outer perimeter of the support layer 22. The porous section 48 may be formed by, for example, laser drilling of a metal sheet. or sintering of metal powder, or additive manufacturing. The porous section 48 is located over the anode flow channels 30 to allow the fuel flow to reach the anode 24 through the porous section 48. In some embodiments, a metal catalyst foam layer 52 is located between the separator plate 20 and the support layer 22.

The fuel cell 10 configurations disclosed herein enable a high performance electrical power system for, for example, an aircraft, especially for long duration operation. The configurations further reduce startup times and provide power densities in the range of 1-3 kilowatts/kilogram with a cell performance of 0.8W/cm². Further, the improved power density may be achieved utilizing a lightweight separator plate 20, with a separator plate 20 formed from, for example, stainless steel having a thickness of 2 mil to 10mil. Further, other materials such as titanium alloys, or other materials at lower operating temperatures may be used to form a lightweight separator plate 20.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the claims. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A fuel cell layer of a multi-layer fuel cell, comprising:
a cathode (28);
an anode (24);
an electrolyte (26) disposed between the anode and the cathode;
a support layer (22) disposed at the anode opposite the electrolyte;
a separator plate (20) disposed at the support layer opposite the anode, the support layer configured to contact the cathode of an adjacent fuel cell layer, the separator plate defining a plurality of anode flow channels configured to deliver a fuel therethrough and a plurality of cathode flow channels configured to deliver an air flow therethrough wherein the anode flow channels and the cathode flow channels at least partially overlap along a stacking axis direction of the multilayer fuel cell.

2. The fuel cell layer of claim 1 , wherein the electrolyte is formed from a solid oxide material.

3. The fuel cell layer of any preceding claim, wherein the separator plate defines the plurality of anode flow channels at a first side of the separator plate and the plurality of cathode flow channels at a second side of the separator plate opposite the first side.

4. The fuel cell layer of any preceding claim, wherein the separator plate includes a plurality of curved portions separated by flat plate portions, with the plate portions interfacing with the support layer and curved portions contacting the cathode of the adjacent fuel cell layer.

5. The fuel cell layer of any preceding claim, wherein the plurality of anode flow channels at least partially overlap the plurality of cathode flow channels along the stacking axis.

6. The fuel cell layer of any preceding claim, wherein the support layer includes a porous portion disposed at the anode flow channels configured to allow fuel flow from the anode fuel channels to the anode through the porous portion.

7. The fuel cell layer of claim 6, the support layer further comprising a non-porous portion surrounding the porous portion.

8. The fuel cell layer of claim 7, further comprising one or more manifolds disposed in the solid portion to distribute fuel to the plurality of anode flow channels.

9. The fuel cell layer of any preceding claim, wherein the support layer is formed from a metal material.

10. The fuel cell layer of any preceding claim, further comprising a metal catalyst foam disposed between the support layer and the separator plate.

11. A fuel cell (10), comprising:
a plurality of fuel cell layers as recited in any preceding claim stacked along a stacking axis.

## Patentansprüche

1. Brennstoffzellenschicht einer mehrschichtigen Brennstoffzelle, umfassend:
eine Kathode (28);
eine Anode (24);
einen Elektrolyten (26), der zwischen der Anode und der Kathode angeordnet ist;
eine Trägerschicht (22), die gegenüber dem Elektrolyten an der Anode angeordnet ist;
ein Trennblech (20), das an der Trägerschicht gegenüber der Anode angeordnet ist, wobei die Trägerschicht dazu ausgelegt ist, die Kathode einer benachbarten Brennstoffzellenschicht zu berühren, wobei das Trennblech eine Vielzahl von Anodenströmungskanälen, die dazu ausgelegt ist, einen Brennstoff dadurch abzugeben, und eine Vielzahl von Kathodenströmungskanälen definiert, die dazu ausgelegt ist, einen Luftstrom dadurch abzugeben, wobei sich die Anodenströmungskanäle und die Kathodenströmungskanäle entlang einer Stapelachsenrichtung der mehrschichtigen Brennstoffzelle mindestens teilweise überlappen.

2. Brennstoffzellenschicht nach Anspruch 1, wobei der Elektrolyt aus einem festen Oxidmaterial ausgebildet ist.

3. Brennstoffzellenschicht nach einem der vorhergehenden Ansprüche, wobei das Trennblech die Vielzahl von Anodenströmungskanälen auf einer ersten Seite des Trennblechs und die Vielzahl von Kathodenströmungskanälen auf einer der ersten Seite gegenüberliegenden zweiten Seite des Trennblechs definiert.

4. Brennstoffzellenschicht nach einem der vorhergehenden Ansprüche, wobei das Trennblech eine Vielzahl von durch flache Blechabschnitte getrennten gekrümmten Abschnitten beinhaltet, wobei die Blechabschnitte mit der Trägerschicht verbunden sind und die gekrümmten Abschnitte die Kathode der benachbarten Brennstoffzellenschicht berühren.

5. Brennstoffzellenschicht nach einem der vorhergehenden Ansprüche, wobei die Vielzahl von Anodenströmungskanälen die Vielzahl von Kathodenströmungskanälen entlang der Stapelachse mindestens teilweise überlappt.

6. Brennstoffzellenschicht nach einem der vorhergehenden Ansprüche, wobei die Trägerschicht einen an den Anodenströmungskanälen angeordneten porösen Abschnitt beinhaltet, der dazu ausgelegt ist, einen Brennstoffstrom von den Anodenbrennstoffkanälen durch den porösen Abschnitt zu der Anode zu ermöglichen.

7. Brennstoffzellenschicht nach Anspruch 6, wobei die Trägerschicht ferner einen den porösen Abschnitt umgebenden nicht porösen Abschnitt umfasst.

8. Brennstoffzellenschicht nach Anspruch 7, ferner umfassend einen oder mehrere Verteiler, die in dem festen Abschnitt zum Verteilen von Brennstoff an die Vielzahl von Anodenströmungskanälen angeordnet sind.

9. Brennstoffzellenschicht nach einem der vorhergehenden Ansprüche, wobei die Trägerschicht aus einem Metallmaterial ausgebildet ist.

10. Brennstoffzellenschicht nach einem der vorhergehenden Ansprüche, ferner umfassend einen zwischen der Trägerschicht und dem Trennblech angeordneten Metallkatalysatorschaum.

11. Brennstoffzelle (10), umfassend:
eine Vielzahl von Brennstoffzellenschichten nach einem der vorhergehenden Ansprüche, die entlang einer Stapelachse gestapelt ist.

## Revendications

1. Couche de pile à combustible d'une pile à combustible multicouche, comprenant :
une cathode (28) ;
une anode (24) ;
un électrolyte (26) disposé entre l'anode et la cathode ;
une couche de support (22) disposée au niveau de l'anode à l'opposé de l'électrolyte ;
une plaque séparatrice (20) disposée au niveau de la couche de support à l'opposé de l'anode, la couche de support étant configurée pour entrer en contact avec la cathode d'une couche de pile à combustible adjacente, la plaque séparatrice définissant une pluralité de canaux d'écoulement d'anode configurés pour acheminer un combustible à travers ceux-ci et une pluralité de canaux d'écoulement de cathode configurés pour acheminent un flux d'air à travers ceux-ci, dans laquelle les canaux d'écoulement d'anode et les canaux d'écoulement de cathode se chevauchent au moins partiellement le long d'une direction d'axe d'empilement de la pile à combustible multicouche.

2. Couche de pile à combustible selon la revendication 1, dans laquelle l'électrolyte est formé à partir d'un matériau d'oxyde solide.

3. Couche de pile à combustible selon une quelconque revendication précédente, dans laquelle la plaque séparatrice définit la pluralité de canaux d'écoulement d'anode au niveau d'un premier côté de la plaque séparatrice et la pluralité de canaux d'écoulement de cathode au niveau d'un second côté de la plaque séparatrice à l'opposé du premier côté.

4. Couche de pile à combustible selon une quelconque revendication précédente, dans laquelle la plaque séparatrice comporte une pluralité de parties courbes séparées par des parties de plaque plates, les parties de plaque étant en interface avec la couche de support et les parties courbes étant en contact avec la cathode de la couche de pile à combustible adjacente.

5. Couche de pile à combustible selon une quelconque revendication précédente, dans laquelle la pluralité de canaux d'écoulement d'anode chevauchent au moins partiellement la pluralité de canaux d'écoulement de cathode le long de l'axe d'empilement.

6. Couche de pile à combustible selon une quelconque revendication précédente, dans laquelle la couche de support comporte une partie poreuse disposée au niveau des canaux d'écoulement d'anode configurée pour permettre l'écoulement de combustible depuis les canaux d'écoulement d'anode vers l'anode à travers la partie poreuse.

7. Couche de pile à combustible selon la revendication 6, la couche de support comprenant également une partie non poreuse entourant la partie poreuse.

8. Couche de pile à combustible selon la revendication 7, comprenant également un ou plusieurs collecteurs disposés dans la partie solide pour alimenter en combustible la pluralité de canaux d'écoulement d'anode.

9. Couche de pile à combustible selon une quelconque revendication précédente, dans laquelle la couche de support est formée d'un matériau métallique.

10. Couche de pile à combustible selon une quelconque revendication précédente, comprenant également une mousse de catalyseur métallique disposée entre la couche de support et la plaque séparatrice.

11. Pile à combustible (10), comprenant :
une pluralité de couches de piles à combustible selon une quelconque revendication précédente, empilées le long d'un axe d'empilement.
